# EUROPÄISCHE PATENTSCHRIFT

(11) **EP 3 137 250 B1**
(45) Veröffentlichungstag und Bekanntmachung des Hinweises auf die Patenterteilung: **17.10.2018**
(21) Anmeldenummer: 15718885.5
(22) Anmeldetag: 28.04.2015
(51) Int. Cl.: B23B 51/06

(54) **WERKZEUG UND VERFAHREN ZUR SPANENDEN BEARBEITUNG EINES WERKSTÜCKS**
TOOL AND METHOD FOR MACHINING A WORKPIECE
OUTIL ET PROCÉDÉ D'USINAGE D'UNE PIÈCE PAR ENLÈVEMENT DE COPEAUX

(30) Priorität: 28.04.2014 DE 102014105908
(43) Veröffentlichungstag der Anmeldung: 08.03.2017
(73) Patentinhaber: Hartmetall-Werkzeugfabrik Paul Horn GmbH, 72072 Tübingen (DE)
(72) Erfinder: LUIK, Matthias, 72766 Reutlingen (DE); HAMM, Christoph, 66894 Martinshöhe (DE)
(74) Vertreter: Witte, Weller & Partner Patentanwälte mbB
(86) Internationale Anmeldenummer: PCT/EP2015/059141
(87) Internationale Veröffentlichungsnummer: WO 2015/165872

(56) Entgegenhaltungen:
- EP-B1- 0 118 035
- EP-B1- 1 239 986
- WO-A1-2011/023429
- DE-A1- 3 615 940
- DE-C2- 3 432 615
- DE-U1-202005 020 931
- US-A- 1 409 753
- US-A- 2 555 302
- US-A- 3 085 453

## Beschreibung

Die vorliegende Erfindung betrifft ein Werkzeug gemäß dem Oberbegriff des unabhängigen Anspruchs 1 zur spanenden Bearbeitung eines Werkstücks, wobei das Werkzeug zumindest zwei Werkzeug-Bauteile aufweist, welche mit Hilfe eines Fügematerials miteinander verbunden sind. Die vorliegende Erfindung betrifft insbesondere die Art der Verbindung der beiden Werkzeug-Bauteile. Darüber hinaus betrifft die vorliegende Erfindung die einzelnen Werkzeug-Bauteile des hier vorgestellten Werkzeugs. Ferner betrifft die vorliegende Erfindung ein Verfahren gemäß dem Oberbegriff des unabhängigen Anspruchs 11 zur Herstellung des genannten Werkzeugs. Ein derartiges Werkzeug und ein derartiges Verfahren sind aus dem Dokument WO 2011/023429 A bekannt.

Derartige Werkzeuge, wozu beispielsweise Bohr-, Dreh-, Fräs-, Nutstoß- oder Reibwerkzeuge zählen, werden häufig aus einzelnen, unterschiedlichen Werkzeug-Bauteilen hergestellt, die während der Fertigung des Werkzeugs miteinander dauerhaft verbunden werden. Bei diesen unterschiedlichen Werkzeug-Bauteilen handelt es sich beispielsweise um den Werkzeugschaft sowie um ein Zwischenstück zur Aufnahme eines Schneideinsatzes, welches mit dem Werkzeugschaft fest verbunden wird. Während der Fertigung des Werkzeugs werden diese Werkzeug-Bauteile durch einen Fügeprozess, insbesondere durch ein Löt- oder Klebeprozess, miteinander fest verbunden. Wenngleich derartige Löt- und Klebeverfahren bereits weitläufig bekannt sind, gestaltet sich das Fügen zweier Werkzeug-Bauteile insbesondere dann als schwierig, wenn es sich bei den Werkzeug-Bauteilen um Bauteile handelt, die jeweils eine oder mehrere interne Kühlmittelbohrungen aufweisen, welche in zusammengebautem Zustand des Werkzeugs miteinander fluchten sollen. Das Fügematerial (z.B. Lot oder Klebematerial), welches an der Schnittstelle zwischen den beiden Werkzeug-Bauteilen angebracht wird, gelangt dann häufig in das Innere der internen Kühlmittelbohrungen, was zu einem Verstopfen und damit zu einem Funktionsausfall der Kühlmittelbohrungen des zu fertigenden Werkzeugs führen kann.

Ein Verstopfen der Kühlmittelbohrungen durch das Fügematerial rührt meist daher, dass während des Fügeprozesses die beiden zu fügenden Werkzeug- Bauteile entweder von Hand oder maschinell relativ zu einander bewegt werden, um eine gleichmäßige Benetzung der zu fügenden Verbindungsflächen mit Fügematerial zu erreichen. Dabei wird das Fügematerial dann auch über die an den Verbindungsflächen angeordneten Kühlmittelaustritte der internen Kühlmittelbohrungen verteilt. Die zugesetzten bzw. verstopften Kühlmittelbohrungen müssen somit in einem nachgelagerten Fertigungsschritt wieder aufgebohrt werden. Sofern eines der beiden oder beide Werkzeug- Bauteile aus Hartmetall hergestellt sind, ist der Bohrungsdurchmesser dann jedoch kleiner als der ursprüngliche Durchmesser der internen Kühlmittelbohrung, so dass sich der effektive Querschnitt der internen Kühlmittelbohrung schlussendlich nachteilig verringert.

Ein weiteres Problem während des Fügeprozesses besteht darin, die internen Kühlmittelbohrungen der beiden Werkzeug-Bauteile relativ zueinander auszurichten. Die Kühlmittelaustritte des einen Werkzeug-Bauteils sollten in montiertem Zustand des Werkzeugs mit den Kühlaustritten des anderen Werkzeug-Bauteils exakt fluchten. Um dies während des Fügeprozesses zu gewährleisten, wird beispielsweise ein Draht oder anderes Hilfsmittel durch die Kühlmittelbohrung des einen Werkzeug-Bauteils hindurch in die Kühlmittelbohrung des anderen Werkzeug-Bauteils eingeführt. Eine wie oben erwähnte, notwendige Relativbewegung zur verbesserten Benetzung der Kontaktflächen mit Fügematerial ist dann jedoch nicht mehr möglich. Im Übrigen gestaltet es sich meist als schwierig, den Draht oder das andere Hilfsmittel nach dem Fügeprozess aus den Kühlmittelbohrungen wieder zu entfernen. Zudem lassen sich die Kühlmittelbohrungen der zu fügenden Werkzeug-Bauteile auf diese Art und Weise nur dann zueinander ausrichten, wenn es sich bei den internen Kühlmittelbohrungen um geradlinige Bohrungen handelt. Handelt es sich jedoch bei zumindest einer der Kühlmittelbohrungen um eine gekrümmte oder gewendelte Bohrung, ist ein derartiges Ausrichten der beiden Werkzeug-Bauteile auf diese Weise nicht möglich.

Zur Überwindung der oben genannten Problemstellung wird teilweise auch versucht, während des Fügeprozesses Luft durch die internen Kühlmittelkanäle zu blasen, damit diese nicht mit Fügematerial volllaufen. Allerdings lassen sich auch bei diesem Verfahren nur kleine Relativbewegungen der beiden Werkzeug-Bauteile zur Verteilung des Fügematerials auf den Kontaktflächen realisieren. Andererseits wird das Fügematerial aufgrund dieser Sperrluft-Zufuhr in die internen Kühlmittelbohrungen hineingeblasen, so dass das Teile des Fügematerials auf den Innenseiten der Kühlmittelbohrungen anhaften, was wiederum zur Verstopfung oder einer nachteiligen Verkleinerung des effektiven Querschnitts der Kühlmittelbohrungen führen kann.

Weitere Werkzeuge, bei denen zwei Werkzeug-Bauteile mit Hilfe einer Fügeverbindung miteinander verbunden sind, welche der erfindungsgemäßen Art der Verbindung zumindest im Entferntesten ähnelt, sind aus den folgenden Druckschriften bekannt: US 3,085,453 A, DE 20 2005 020931 U1, WO 2011/023429 A1, DE 36 15 940 A1, US 1,409,753 A, DE 34 32 615 C2, EP 1 239 986 B1, US 2,555,302 A.

Vor diesem Hintergrund ist es eine Aufgabe der vorliegenden Erfindung, ein Werkzeug zur spanenden Bearbeitung eines Werkstücks bereitzustellen, welches zumindest zwei miteinander mit Hilfe eines Fügematerials verbundene Werkzeug-Bauteile aufweist, wobei die Verbindungsschnittstelle zwischen diesen beiden Werkzeug-Bauteilen verbessert ist. Die Verbindungsschnittstelle zwischen den Werkzeug-Bauteilen soll insbesondere dahingehend verbessert werden, dass sich ein Fügen der beiden Bauteile während der Fertigung einfacher realisieren lässt, ohne dass es zu den oben genannten Problemen kommt. Durch eine verbesserte Verbindungsschnittstelle zwischen den beiden Werkzeug-Bauteilen soll insbesondere während des Fügeprozesses ein Verstopfen der in den Werkzeug-Bauteilen verlaufenden internen Kühlmittelbohrungen verhindert werden. Zudem sollte die verbesserte Verbindungsschnittstelle während der Fertigung des Werkzeugs ein vereinfachtes Ausrichten der beiden Werkzeug-Bauteile relativ zueinander ermöglichen, so dass sichergestellt ist, dass die jeweiligen Kühlmittelaustritte der beiden Werkzeug-Bauteile nach dem Fügeprozess möglichst exakt miteinander fluchten. Ferner ist es eine Aufgabe der vorliegenden Erfindung, ein Verfahren zur Herstellung des Werkzeugs anzugeben.

Gemäß einem ersten Aspekt der vorliegenden Erfindung wird ein Werkzeug gemäß Anspruch 1 zur spanenden Bearbeitung eines Werkstücks bereitgestellt, mit:
- einem ersten Werkzeug-Bauteil, welches eine erste interne Kühlmittelbohrung und an einem ersten stirnseitigen Ende eine erste Verbindungsschnittstelle aufweist, wobei die erste Verbindungsschnittstelle eine erste Stirnfläche zur Anbringung eines Fügematerials sowie eine von der ersten Stirnfläche abstehende Erhöhung aufweist, wobei die Erhöhung als längliche, geradlinig verlaufende Passfeder ausgebildet ist, welche sich in radialer Richtung zumindest über einen Großteil der Breite des ersten Werkzeug-Bauteils erstreckt und die erste Stirnfläche in zwei im Wesentlichen gleich große erste Teil-Stirnflächen unterteilt, wobei ein erster Kühlmittelaustritt der ersten internen Kühlmittelbohrung an der Erhöhung angeordnet ist; und
- einem zweiten Werkzeug-Bauteil, welches eine zweite interne Kühlmittelbohrung und an einem zweiten stirnseitigen Ende eine zweite Verbindungsschnittstelle aufweist, wobei die zweite Verbindungsschnittstelle eine zweite Stirnfläche zur Anbringung des Fügematerials sowie eine in die zweite Stirnfläche eingebrachte Vertiefung aufweist, wobei die Vertiefung als längliche, geradlinig verlaufende Nut ausgebildet ist, welche sich in radialer Richtung zumindest über einen Großteil der Breite des zweiten Werkzeug-Bauteils erstreckt und die zweite Stirnfläche in zwei gleich große zweite Teil-Stirnflächen unterteilt, wobei ein zweiter Kühlmittelaustritt der zweiten internen Kühlmittelbohrung in der Vertiefung angeordnet ist;
wobei das erste Werkzeug-Bauteil und das zweite Werkzeug-Bauteil mit Hilfe des an der ersten und zweiten Stirnfläche angebrachten Fügematerials derart miteinander verbunden sind, dass der erste Kühlmittelaustritt mit dem zweiten Kühlmittelaustritt fluchtet, und wobei die erste interne Kühlmittelbohrung und die zweite interne Kühlmittelbohrung als gekrümmte, nicht geradlinige Bohrungen, insbesondere als gewendelte Bohrungen, ausgebildet sind.

Ferner wird gemäß einem weiteren Aspekt der vorliegenden Erfindung ein Verfahren gemäß Anspruch 11 zur Herstellung eines Werkzeugs zur spanenden Bearbeitung eines Werkstücks bereitgestellt, mit den Verfahrensschritten:
- Bereitstellen eines ersten Werkzeug-Bauteils, welches eine erste interne Kühlmittelbohrung und an einem ersten stirnseitigen Ende eine erste Verbindungsschnittstelle aufweist, wobei die erste interne Kühlmittelbohrung als gekrümmte, nicht geradlinige Bohrung, insbesondere als gewendelte Bohrung, ausgebildet ist, wobei die erste Verbindungsschnittstelle eine erste Stirnfläche zur Anbringung eines Fügematerials sowie eine von der ersten Stirnfläche abstehende Erhöhung aufweist, wobei die Erhöhung als längliche, geradlinig verlaufende Passfeder ausgebildet ist, welche sich in radialer Richtung zumindest über einen Großteil der Breite des ersten Werkzeug-Bauteils erstreckt und die erste Stirnfläche in zwei im Wesentlichen gleich große erste Teil-Stirnflächen unterteilt, wobei ein erster Kühlmittelaustritt der ersten internen Kühlmittelbohrung an der Erhöhung angeordnet ist;
- Bereitstellen eines zweiten Werkzeug-Bauteils, welches eine zweite interne Kühlmittelbohrung und an einem zweiten stirnseitigen Ende eine zweite Verbindungsschnittstelle aufweist, wobei die zweite interne Kühlmittelbohrung als gekrümmte, nicht geradlinige Bohrung, insbesondere als gewendelte Bohrung, ausgebildet ist, wobei die zweite Verbindungsschnittstelle eine zweite Stirnfläche zur Anbringung des Fügematerials sowie eine in die zweite Stirnfläche eingebrachte Vertiefung aufweist, wobei die Vertiefung als längliche, geradlinig verlaufende Nut ausgebildet ist, welche sich in radialer Richtung zumindest über einen Großteil der Breite des zweiten Werkzeug-Bauteils erstreckt und die zweite Stirnfläche in zwei gleich große zweite Teil-Stirnflächen unterteilt, wobei ein zweiter Kühlmittelaustritt der zweiten internen Kühlmittelbohrung in der Vertiefung angeordnet ist;
- Anbringen eines Fügematerials an der ersten und/oder zweiten Stirnfläche;
- Ausrichten des ersten Werkzeug-Bauteils relativ zu dem zweiten Werkzeug-Bauteil, und zwar derart, dass der erste Kühlmittelaustritt mit dem zweiten Kühlmittelaustritt fluchtet;
- Verbinden der ersten Verbindungsschnittstelle des ersten Werkzeug-Bauteils mit der zweiten Verbindungsschnittstelle des zweiten Werkzeug-Bauteils mit Hilfe des Fügematerials.

Die vorliegende Erfindung betrifft also ein Werkzeug zur spanenden Bearbeitung eines Werkstücks sowie das Verfahren zur Herstellung dieses Werkzeugs.

Ausgestaltungen der vorliegenden Erfindung sind in den abhängigen Ansprüchen definiert. Es versteht sich, dass sich die in den abhängigen Ansprüchen definierten Merkmale nicht nur auf das Werkzeug selbst beziehen, sondern sich in gleicher oder entsprechender Weise auch auf das im Anspruch 11 definierte Verfahren übertragen lassen.

Das erfindungsgemäße Werkzeug zeichnet sich insbesondere durch eine verbesserte Schnittstellen-Lösung zur Verbindung der beiden Werkzeug-Bauteile des Werkzeugs aus. Beide Werkzeug-Bauteile weisen dazu miteinander korrespondierende Verbindungsschnittstellen auf, welche vorliegend als erste bzw. zweite Verbindungsschnittstelle bezeichnet werden. Diese beiden miteinander korrespondierenden Verbindungsschnittstellen fungieren als zueinander passende Gegenstücke, welche während der Fertigung des Werkzeugs durch Löten, Kleben oder mittels eines alternativen Fügeverfahrens miteinander verbunden werden. Beide Verbindungsschnittstellen weisen jeweils zumindest eine Stirnfläche zur Anbringung des Fügematerials auf, welche mit der Stirnfläche der Verbindungsschnittstelle des jeweils anderen Werkzeug-Bauteils korrespondiert und in fertigem Zustand des Werkzeugs verbunden ist. Zusätzlich zu dieser Stirnfläche weist die Verbindungsschnittstelle (erste Verbindungsschnittstelle genannt) des ersten Werkzeug-Bauteils eine von der Stirnfläche (erste Stirnfläche genannt) abstehende Erhöhung auf, an der der Kühlmittelaustritt der durch das erste Werkzeug-Bauteil verlaufenden Kühlmittelbohrung angeordnet ist. Korrespondierend dazu weist die Verbindungsschnittstelle (zweite Verbindungsschnittstelle genannt) des zweiten Werkzeug-Bauteils eine in die Stirnfläche (zweite Stirnfläche genannt) eingebrachte Vertiefung auf, in der der Kühlmittelaustritt der durch das zweite Werkzeug-Bauteil verlaufenden Kühlmittelbohrung angeordnet ist. Die von der Stirnfläche des ersten Werkzeug-Bauteils abstehende Erhöhung und die in die Stirnfläche des zweiten Werkzeug-Bauteils eingebrachte Vertiefung wirken in der Art einer Nut-Feder-Verbindung zusammen, wobei die Begriffe "Nut" und "Feder" vorliegend keine spezielle Querschnittsform der Nut bzw. Feder definieren sollen.

Die an der ersten Verbindungsschnittstelle angeordnete Erhöhung und die an der zweiten Verbindungsschnittstelle angeordnete, zugehörige Vertiefung bieten zum einen den Vorteil, dass die Kühlmittelaustritte der Kühlmittelbohrungen beider Werkzeug-Bauteile jeweils von den Stirnflächen beabstandet sind, an welchen das Fügematerial angebracht ist. Da die von der ersten Stirnfläche abstehende Erhöhung vorzugsweise passgenau in die in die zweite Stirnfläche eingebrachte Vertiefung passt, kann das zum Fügen der beiden Werkzeug-Bauteile verwendete Fügematerial nicht in die Kühlmittelbohrungen der beiden Werkzeug- Bauteile gelangen. Bei der Herstellung des Werkzeugs können die beiden Werkzeug-Bauteile zudem, durch die Erhöhung bzw. Vertiefung geführt, oszillierend relativ zueinander bewegt werden, um das Fügematerial möglichst gut auf den beiden Stirnflächen der Verbindungsschnittstellen zu verteilen. Mit Hilfe der an den Verbindungsschnittstellen vorgesehenen Erhöhung bzw. Vertiefung lassen sich die beiden Werkzeug-Bauteile auch einfacher relativ zueinander derart positionieren, dass der erste Kühlmittelaustritt der Kühlmittelbohrung des ersten Werkzeug-Bauteils mit dem zweiten Kühlmittelaustritt der Kühlmittelbohrung des zweiten Werkzeug-Bauteils fluchtet. Insgesamt ist das Werkzeug dadurch einfacher herstellbar. Nicht nur die Problematik eines Verstopfens der Kühlmittelbohrungen während der Fertigung des Werkzeugs, sondern auch die Problematik der relativ schwierig zu gewährleistenden, exakten Ausrichtung der beiden Werkzeug-Bauteile ist daher ausgeräumt.

Die oben genannte Aufgabe ist somit vollständig gelöst.

Gemäß einer Ausgestaltung weist das erste Werkzeug-Bauteil eine erste Ausrichtfläche und das zweite Werkzeug-Bauteil eine zu der ersten Ausrichtfläche korrespondierende zweite Ausrichtfläche auf, wobei ein Abstand von der ersten Ausrichtfläche zu dem ersten Kühlmittelaustritt gleich groß ist wie ein zweiter Abstand von der zweiten Ausrichtfläche zu dem zweiten Kühlmittelaustritt.

Diese Ausrichtflächen ermöglichen es, die beiden Werkzeug-Bauteile derart relativ zueinander auszurichten, dass der am ersten Werkzeug-Bauteil vorgesehene erste Kühlmittelaustritt mit dem am zweiten Werkzeug-Bauteil vorgesehenen zweiten Kühlmittelaustritt fluchtet. Hierzu müssen lediglich die beiden Ausrichtflächen (erste und zweite Ausrichtfläche) komplanar zueinander ausgerichtet werden. Dies kann beispielsweise von Hand oder maschinell mit Hilfe eines Werkzeugs geschehen. Die erste und zweite Ausrichtfläche sind vorzugsweise als planare Flächen ausgebildet, welche am Außenumfang des jeweiligen Werkzeug-Bauteils angeordnet sind. Aufgrund der Tatsache, dass der Abstand (erster Abstand) zwischen der ersten Ausrichtfläche und dem ersten Kühlmittelaustritt gleich groß ist wie der Abstand (zweiter Abstand) zwischen der zweiten Ausrichtfläche und dem zweiten Kühlmittelaustritt, fluchten die beiden Kühlmittelaustritte automatisch miteinander, sobald die beiden Ausrichtflächen komplanar zueinander ausgerichtet sind.

Während der Fertigung des Werkzeugs wird das Fügematerial also zunächst auf eine der beiden Stirnflächen aufgetragen, dann die beiden Werkzeug-Bauteile zusammengeführt, so dass die beiden Stirnflächen einander kontaktieren und die von der ersten Stirnfläche abstehende Erhöhung in die in die zweite Stirnfläche eingebrachte Vertiefung eingreift. Um das Fügematerial über die gesamten Stirnflächen zu verteilen, werden die beiden Werkzeug-Bauteile dann relativ zueinander entlang der Längsrichtung der Erhöhung bzw. Vertiefung bewegt. Die erste und die zweite Stirnfläche sind dazu vorzugsweise als planare Flächen ausgebildet. Sobald das Fügematerial ausreichend verteilt ist, werden die Kühlmittelaustritte mit Hilfe der Ausrichtflächen in oben genannter Weise fluchtend zueinander ausgerichtet.

Gemäß einer weiteren Ausgestaltung weist das erste Werkzeug-Bauteil zusätzlich eine dritte Ausrichtfläche und das zweite Werkzeug-Bauteil zusätzlich eine zu der dritten Ausrichtfläche korrespondierende vierte Ausrichtfläche auf, wobei die erste und die dritte Ausrichtfläche auf gegenüberliegenden Seiten am Außenumfang des ersten Werkzeug-Bauteils angeordnet sind und jeweils quer zu der ersten Stirnfläche verlaufen, und wobei die zweite und die vierte Ausrichtfläche auf gegenüberliegenden Seiten am Außenumfang des zweiten Werkzeug-Bauteils angeordnet sind und quer zu der zweiten Stirnfläche verlaufen.

In diesem Fall weist jedes Werkzeug-Bauteil also zwei Ausrichtflächen auf, welche mit zwei entsprechenden Ausrichtflächen des jeweils anderen Werkzeug-Bauteils korrespondieren. Dies vereinfacht zusätzlich die Ausrichtung der beiden Werkzeug-Bauteile relativ zueinander. Zur Ausrichtung werden die beiden Werkzeug-Bauteile derart zueinander ausgerichtet, dass die erste Ausrichtfläche komplanar zu der zweiten Ausrichtfläche ist und die dritte Ausrichtfläche komplanar zu der vierten Ausrichtfläche ist. Die erste Ausrichtfläche ist vorzugsweise parallel zu der dritten Ausrichtfläche. Ebenso ist die zweite Ausrichtfläche vorzugsweise parallel zu der vierten Ausrichtfläche. Da die Ausrichtflächen auf gegenüberliegenden Seiten des jeweiligen Werkzeug-Bauteils angeordnet sind, ist die erste Ausrichtfläche also beabstandet von der dritten Ausrichtfläche und die zweite Ausrichtfläche beabstandet von der vierten Ausrichtfläche. Der Abstand zwischen der ersten und dritten Ausrichtfläche, welche beide am ersten Werkzeug-Bauteil angeordnet sind, ist gleich groß wie der Abstand zwischen der zweiten und der vierten Ausrichtfläche, welche beide am zweiten Werkzeug-Bauteil angeordnet sind. Wenngleich unter "quer" vorliegend "nicht-parallel" verstanden wird, verlaufen die erste und die dritte Ausrichtfläche vorzugsweise orthogonal zu der am ersten Werkzeug-Bauteil vorgesehenen ersten Stirnfläche. Genauso verlaufen die zweite und die vierte Ausrichtfläche vorzugsweise orthogonal zu der am zweiten Werkzeug-Bauteil vorgesehenen zweiten Stirnfläche. Bei beiden Verbindungsschnittstellen handelt es sich also vorzugsweise um miteinander korrespondierende, symmetrische Verbindungsschnittstellen.

Wenngleich bisher lediglich von jeweils einer internen Kühlmittelbohrung pro Werkzeug-Bauteil die Rede war, so versteht es sich, dass sowohl das erste als auch das zweite Werkzeug-Bauteil jeweils mehrere miteinander korrespondierende interne Kühlmittelbohrungen aufweisen können. Gemäß einer Ausgestaltung sind daher mehrere (insbesondere zwei) erste interne Kühlmittelbohrungen im ersten Werkzeug-Bauteil und mehrere (insbesondere zwei) zweite Kühlmittelbohrungen im zweiten Werkzeug-Bauteil vorgesehen, wobei die ersten internen Kühlmittelbohrungen jeweils in einen ersten an der Erhöhung angeordneten Kühlmittelaustritt münden und die zweiten internen Kühlmittelbohrungen jeweils in einen zweiten in der Vertiefung angeordneten Kühlmittelaustritt münden, wobei sowohl die ersten Kühlmittelaustritte als auch die zweiten Kühlmittelaustritte dezentral am jeweiligen Werkzeug-Bauteil angeordnet sind, und wobei in verbundenem Zustand der beiden Werkzeug-Bauteile die ersten Kühlmittelaustritte mit den zweiten Kühlmittelaustritten paarweise fluchten. Unter "dezentral" soll "nicht-mittig" verstanden werden, also nicht exakt mit der Längsachse des jeweiligen Werkzeug-Bauteils zusammenfallend. Unter "paarweise fluchten" wird vorliegend verstanden, dass jeweils einer der Kühlmittelaustritte der ersten internen Kühlmittelbohrungen mit jeweils einem Kühlmittelaustritt der zweiten Kühlmittelbohrungen fluchtet. Die Abstände von der ersten Ausrichtfläche zu den Kühlmittelaustritten der im ersten Werkzeug-Bauteil vorgesehenen Kühlmittelbohrungen sind daher jeweils gleich groß wie die Abstände von der zweiten Ausrichtfläche zu den Kühlmittelaustritten der im zweiten Werkzeug-Bauteil vorgesehenen internen Kühlmittelbohrungen. Genauso sind die Abstände von der dritten Ausrichtfläche zu den Kühlmittelaustritten der im ersten Werkzeug-Bauteil vorgesehenen internen Kühlmittelbohrungen jeweils gleich groß wie die Abstände von der vierten Ausrichtfläche zu den Kühlmittelaustritten der im zweiten Werkzeug-Bauteil vorgesehenen internen Kühlmittelbohrungen.

Die Erhöhung ist als Passfeder ausgebildet, welche sich zumindest über einen Großteil der Breite des ersten Werkzeug-Bauteils erstreckt und die erste Stirnfläche in zwei im Wesentlichen gleich große erste Teil-Stirnflächen unterteilt. Dementsprechend ist die Vertiefung als Nut ausgebildet, welche sich zumindest über einen Großteil der Breite des zweiten Werkzeug-Bauteils erstreckt und die zweite Stirnfläche in zwei gleich große zweite Teil-Stirnflächen unterteilt.

Die am ersten Werkzeug-Bauteil vorgesehene Passfeder und die am zweiten Werkzeug-Bauteil vorgesehene Nut sind als geradlinige Passfeder bzw. Nut ausgeführt, welche diametral über einen Großteil der Stirnflächen der jeweiligen Werkzeug-Bauteile verlaufen. Die am ersten Werkzeug-Bauteil angeordnete Passfeder verläuft also entlang einer Längsrichtung, welche mit der Radialrichtung des ersten Werkzeug-Bauteils übereinstimmt. Genauso stimmt die Längsrichtung der am zweiten Werkzeug-Bauteil angeordneten Nut mit der Radialrichtung des zweiten Werkzeug-Bauteils überein. Während der Fertigung des Werkzeugs können die beiden Werkzeug-Bauteile somit zur Verteilung des Fügematerials entlang der Längsrichtung der Nut bzw. Passfeder relativ zueinander oszillierend bewegt werden, wobei die Nut bzw. Passfeder miteinander in Eingriff bleiben. Das Fügematerial verbleibt somit auf den Teil-Stirnflächen, ohne in die Nut hineinzufließen und damit die Kühlmittelaustritte der internen Kühlmittelbohrungen zu verstopfen. Unter "im Wesentlichen gleich große Teil-Stirnflächen" wird vorliegend verstanden, dass die Teil-Stirnflächen vorzugsweise exakt gleich groß sind, jedoch aufgrund von fertigungstechnischen Anforderungen teilweise in ihre Größe abweichen können. Auf die Querschnittsform der Nut bzw. Passfeder kommt es dabei nicht an. Grundsätzlich sind neben rechteckigen Querschnittsflächen, auch dreieckige, runde oder mehreckige Querschnittsformen der Nut bzw. Passfeder denkbar.

Eine längliche, geradlinig in Radialrichtung verlaufende Nut bzw. Passfeder hat den Vorteil, dass sich die Kühlmittelbohrungen einfacher bzw. mehr oder weniger automatisch korrekt relativ zueinander ausrichten lassen als bei einer zylindrischen Nut bzw. Passfeder. Bei einer zylindrischen Nut bzw. Passfeder ist diese Art der Ausrichtung der Kühlmittelbohrungen im Wesentlichen nur bei einer einzigen, zentral angeordneten Kühlmittelbohrung automatisch durch die Verbindung der beiden Bauteile gegeben, nicht jedoch bei mehreren, dezentral (nicht-mittig) angeordneten Kühlmittelbohrungen.

Gemäß einer weiteren Ausgestaltung sind zumindest Teile der ersten und der dritten Ausrichtfläche an gegenüberliegenden Enden der Passfeder angeordnet. Genauso sind gemäß dieser Ausgestaltung zumindest Teile der zweiten und der vierten Ausrichtfläche an gegenüberliegenden Enden der Nuten angeordnet.

Zur Ausrichtung der beiden Werkzeug-Bauteile relativ zueinander kann somit ein zangenähnliches Werkzeug verwendet werden, welches direkt an den Enden der Nut bzw. Passfeder angreift. Dies ermöglicht eine sehr einfache und exakte Ausrichtung der beiden Werkzeug-Bauteile relativ zueinander, so dass auf einfache Art und Weise gewährleistet ist, dass der/die erste(n) Kühlmitteltaustritt(e) exakt mit dem/den zweiten Kühlmittelaustritt(en) fluchtet/fluchten.

Gemäß einer bevorzugten Ausgestaltung der Erfindung ist es vorgesehen, dass der zweite Kühlmittelaustritt im Nutgrund der Nut angeordnet ist, und dass der erste Kühlmittelaustritt auf einer Oberseite der Passfeder angeordnet ist, welcher in verbundenem Zustand der beiden Werkzeug-Bauteile den Nutgrund kontaktiert.

Durch eine derartige Anordnung der Kühlmittelaustritte ist sichergestellt, dass die Kühlmittelaustritte einen maximal möglichen Abstand von den jeweiligen Stirnflächen der jeweiligen Verbindungsschnittstelle haben. Dieser maximal mögliche Abstandverhindert ein In-Kontakt-Treten des Fügematerials mit den im Nutgrund bzw. den auf der Oberseite der Passfeder angeordneten Kühlmittelaustritten.

Erfindungsgemäß sind die erste und die zweite Kühlmittelbohrung als gekrümmte, nicht geradlinige Bohrungen, insbesondere als gewendelte Bohrungen, ausgebildet.

Gerade bei solchen gekrümmten Bohrungen erweist sich die vorliegende Art der Verbindung zwischen den beiden Werkzeug-Bauteilen des erfindungsgemäßen Werkzeugs als vorteilhaft. Die eingangs erwähnten Verbindungstechniken, welche ein nachträgliches Aufbohren der internen Kühlmittelbohrungen notwendig machen, können bei derartigen gekrümmten Bohrungen nicht eingesetzt werden. Aufgrund der vorgestellten Nut-Feder-Verbindung und der Möglichkeit der Ausrichtung der beiden Werkzeug-Bauteile mittels zweier oder mehrerer miteinander korrespondierender Ausrichtflächen, ist eine Verbindung zweier Werkzeug-Bauteile mit internen, gekrümmten Kühlmittelbohrungen jedoch möglich. Auch in diesem Fall ist es möglich, dass die Kühlmittelaustritte der internen Kühlmittelbohrungen der jeweiligen Werkzeug-Bauteile miteinander fluchten, ohne durch Fügematerial zugesetzt zu werden.

Es sei darauf hingewiesen, dass gemäß der vorliegenden Erfindung die Kühlmittelaustritte jeweils miteinander fluchten. Dagegen ist es jedoch nicht zwingend erforderlich, dass die internen Kühlmittelbohrungen, also deren Längsachsen, in zusammengebautem Zustand des Werkzeugs miteinander fluchten. Beispielsweise können die Kühlmittelbohrungen des einen Werkzeug-Bauteils als geradlinige Kühlmittelbohrungen vorgesehen sein und die Kühlmittelbohrungen des jeweils anderen Werkzeugs als gekrümmte Kühlmittelbohrungen vorgesehen sein, so dass diese an deren Verbindungsstelle nicht zwingend miteinander fluchten müssen. Wichtig ist lediglich, dass die Kühlmittelaustritte der Kühlmittelbohrungen miteinander fluchten, also übereinander liegen, so dass das Kühlmittel verlustfrei von dem einen Werkzeug-Bauteil auf das andere Werkzeug-Bauteil übergeben wird.

Wie oben bereits erwähnt, ermöglicht die oben genannte Art der Verbindung den Einsatz mehrerer, potentieller Fügeprozesse. Vorzugsweise sind die beiden Werkzeug-Bauteile bzw. deren Verbindungsschnittstellen miteinander verlötet oder verklebt. Bei dem Fügematerial handelt es sich also vorzugsweise um Lot- oder Klebematerial. Zusätzlich zu den oben genannten Vorteilen der vorgestellten Nut-Feder-Verbindung hat diese Art der Verbindung auch den Vorteil, dass eine sehr stabile Verbindung zwischen den beiden Werkzeug-Bauteilen erzeugt werden kann, so dass hohe Drehmomente übertragen werden können. Die oben genannte Art der Verbindung zweier Werkzeug-Bauteile lässt sich bei diversen Werkzeugen zur spanenden Bearbeitung eines Werkstücks einsetzen. Das erfindungsgemäße Werkzeug kann somit beispielsweise als Bohr-, Dreh-, Fräs-, Nutstoß- oder Reibwerkzeug ausgebildet sein.

Bei den Werkzeug-Bauteilen handelt es sich meist einerseits um einen Werkzeugschaft und andererseits um ein Verbindungsstück zur Aufnahme für einen Schneideinsatz. Dabei ist eines der beiden Werkzeug-Bauteile vorzugsweise aus Hartmetall und das jeweils andere Werkzeug-Bauteil aus Stahl gefertigt. Beispielsweise handelt es sich bei dem ersten Werkzeug-Bauteil des erfindungsgemäßen Werkzeugs um einen Werkzeugschaft eines Bohr-, Dreh-, Fräs-, Nutstoß- oder Reibwerkzeugs, welcher aus Hartmetall hergestellt ist, und bei dem zweiten Werkzeug-Bauteil um ein Verbindungsstück aus Stahl, welches eine Aufnahme für einen auswechselbaren Schneideinsatz aufweist. Da die Erhöhung bzw. Vertiefung (Nut bzw. Feder) grundsätzlich an beiden Werkzeug-Bauteilen angeordnet werden kann, kann auch das vorliegend als zweite Werkzeug-Bauteil definierte Werkzeug-Bauteil den Werkzeugschaft aus Hartmetall umfassen und dementsprechend das erste Werkzeug-Bauteil das Verbindungsstück aus Stahl umfassen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine perspektivische Ansicht zweier Werkzeug-Bauteile des erfindungsgemäßen Werkzeugs in verbundenem Zustand;
- Fig. 2: eine perspektivische Ansicht der beiden in Fig. 1 dargestellten Werkzeug-Bauteile in getrenntem Zustand;
- Fig. 3: eine perspektivische Ansicht (Fig. 3a) sowie eine Draufsicht (Fig. 3b) einer ersten Verbindungsschnittstelle des ersten Werkzeug-Bauteils;
- Fig. 4: eine perspektivische Ansicht (Fig. 4a) sowie eine Draufsicht (Fig. 4b) einer zweiten Verbindungsschnittstelle des zweiten Werkzeug-Bauteils;
- Fig. 5: eine transparente Ansicht der beiden Werkzeug-Bauteile des erfindungsgemäßen Werkzeugs in zusammengebautem Zustand zur Veranschaulichung der in den beiden Werkzeug-Bauteilen angeordneten internen Kühlmittelbohrungen;
- Fig. 6: eine perspektivische Ansicht einer Ausführungsform des erfindungsgemäßen Werkzeugs als Bohrwerkzeug; und
- Fig. 7: ein vereinfachtes Ablaufdiagramm zur Veranschaulichung des erfindungsgemäßen Verfahrens zur Herstellung des Werkzeugs.

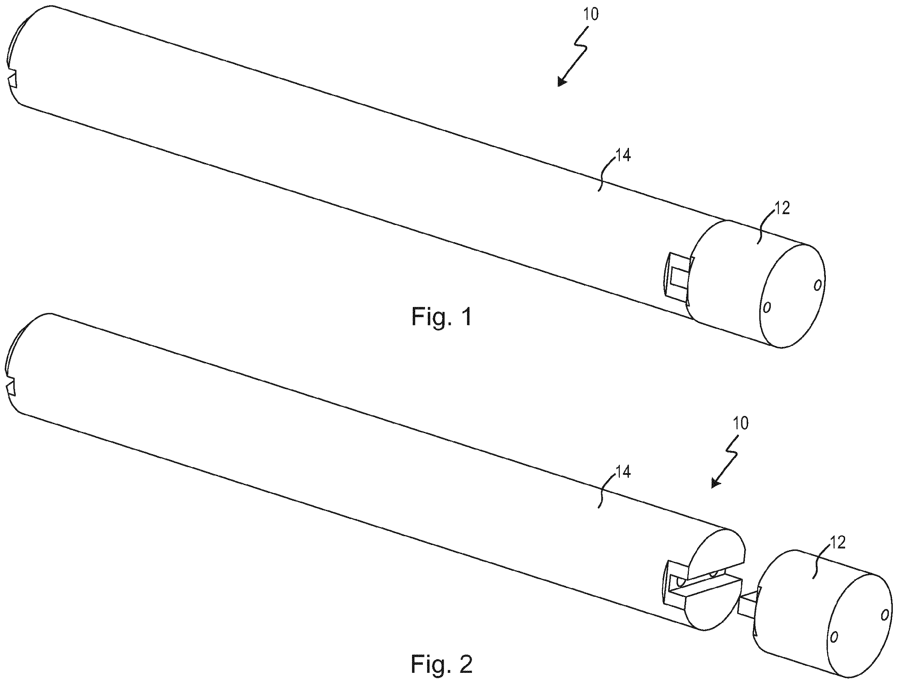

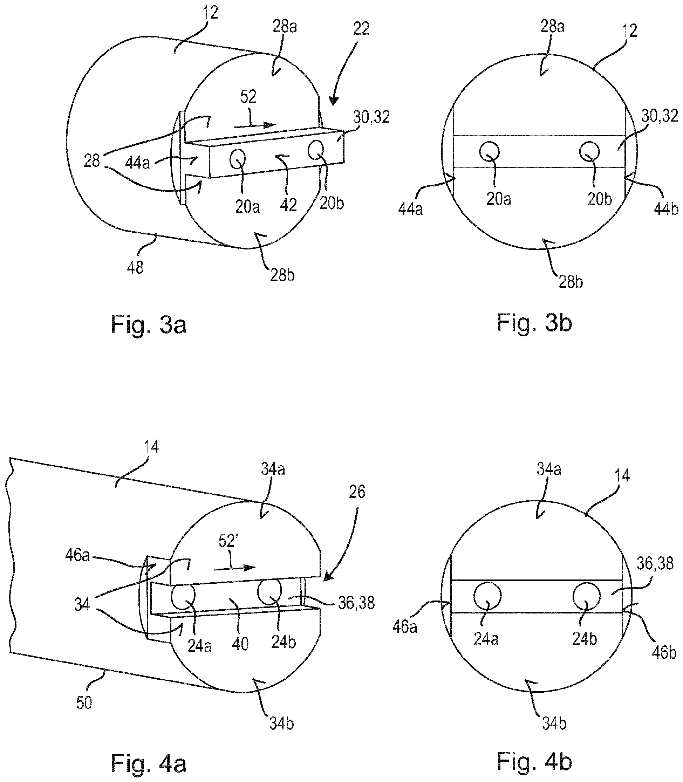

Die Fig. 1 und 2 zeigen zwei Werkzeug-Bauteile 12, 14 eines erfindungsgemäßen Werkzeugs 10 zur spanenden Bearbeitung eines Werkstücks. Fig. 1 zeigt die beiden Werkzeug-Bauteile 12, 14 in zusammengebautem Zustand, wohingegen Fig. 2 die beiden Werkzeug-Bauteile 12, 14 in getrenntem Zustand zeigt. Da die vorliegende Erfindung im Wesentlichen die Art der Verbindung der beiden Werkzeug-Bauteile 12, 14 betrifft, sind die beiden Werkzeug-Bauteile 12, 14 in den Fig. 1-5 lediglich schematisch dargestellt. Es sei daher darauf hingewiesen, dass das erfindungsgemäße Werkzeug 10 weitere, nicht dargestellte Werkzeug-Bauteile aufweisen kann. Bei den in den Fig. 1-5 gezeigten Werkzeug-Bauteilen 12, 14 handelt es sich beispielsweise um Halbzeuge, welche in weiteren Bearbeitungsschritten während der Fertigung zum schlussendlich fertigen Werkzeug 10 weiterverarbeitet werden. Ein weiterer Grund für die abstrakte Darstellung der beiden Werkzeug-Bauteile 12, 14 in den Fig. 1-5 besteht darin, dass die nachfolgend erläuterte, erfindungsgemäße Verbindung der beiden Werkzeug-Bauteile 12, 14 in diversen Werkzeugen 10 zur spanenden Bearbeitung eines Werkstücks einsetzbar ist. Bei dem erfindungsgemäßen Werkzeug kann es sich beispielsweise um ein Bohr-, Dreh-, Fräs-, Nutstoß- oder Reibwerkzeug handeln.

In jedem Fall handelt es sich bei den Werkzeug-Bauteilen 12, 14 um Werkzeug-Bauteile, welche jeweils eine oder mehrere interne Kühlmittelbohrungen aufweisen. Die Art der Verbindung zwischen den beiden Werkzeug-Bauteilen 12, 14 garantiert insbesondere, dass sich diese internen Kühlbohrungen während der Fertigung des Werkzeugs 10 leicht zueinander ausrichten lassen. Zudem verhindert die erfindungsgemäße Lösung ein unerwünschtes Verstopfen der internen Kühlmittelbohrungen durch Fügematerial, welches zur dauerhaften Verbindung der beiden Werkzeug-Bauteile 12, 14 während der Fertigung des Werkzeugs 10 verwendet wird.

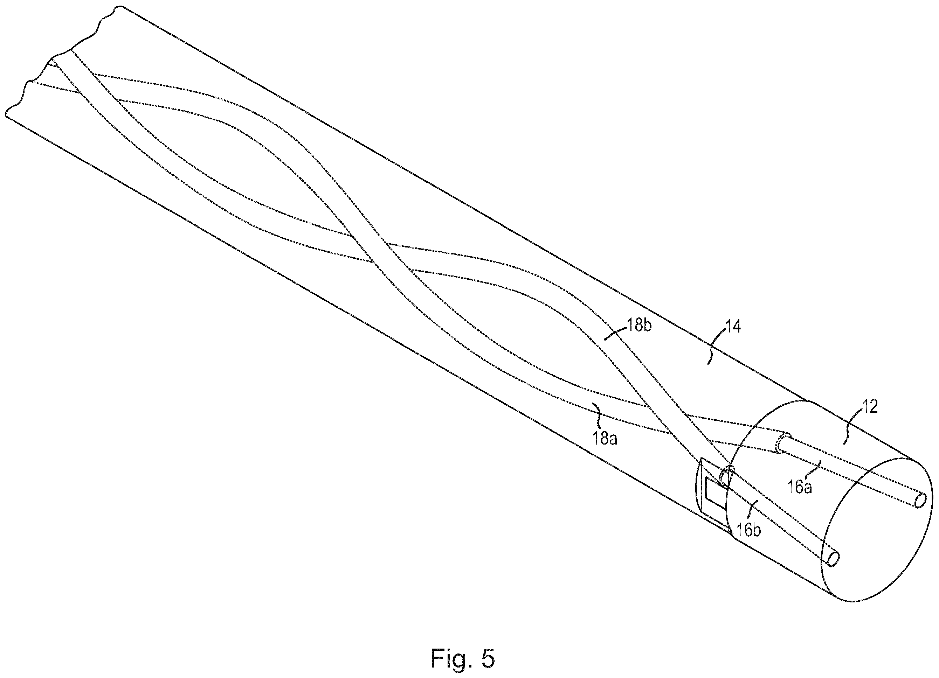

Wie aus Fig. 5 ersichtlich ist, weisen beide Werkzeug-Bauteile 12, 14 gemäß der vorliegenden Ausführungsform jeweils zwei interne Kühlmittelbohrungen 16a, b bzw. 18a, b auf. Die internen Kühlmittelbohrungen 16a, b des ersten Werkzeug-Bauteils 12 werden vorliegend als erste interne Kühlmittelbohrungen 16a, b bezeichnet. Die internen Kühlmittelbohrungen 18a, b des zweiten Werkzeug-Bauteils 14 werden vorliegend hingegen als zweite interne Kühlmittelbohrungen 18a, b bezeichnet.

In zusammengebautem Zustand des Werkzeugs 10 geht die erste interne Kühlmittelbohrung 16a in die zweite interne Kühlmittelbohrung 18a über. In gleicher Weise geht die erste interne Kühlmittelbohrung 16b in die zweite interne Kühlmittelbohrung 18b über. Wenngleich in dem vorliegenden gezeigten Beispiel jeweils zwei interne Kühlmittelbohrungen 16a, b bzw. 18a, b vorgesehen sind, versteht es sich, dass auch nur jeweils eine, oder aber auch mehr als zwei interne Kühlmittelbohrungen 16, 18 pro Werkzeug-Bauteil 12, 14 vorgesehen sein können.

Die beiden ersten internen Kühlmittelbohrungen 16a, b münden in jeweils einen Kühlmittelaustritt 20a, 20b, welcher an einer ersten Verbindungsschnittstelle 22 des ersten Werkzeug-Bauteils 12 angeordnet ist. Die zweiten internen Kühlmittelbohrungen 18a, b münden in jeweils einen zweiten Kühlmittelaustritt 24a, b, welcher an einer zweiten Verbindungsschnittstelle 26 des zweiten Werkzeug-Bauteils 14 angeordnet ist. Die beiden Verbindungsschnittstellen 22, 26 sind jeweils an den miteinander zu fügenden, stirnseitigen Enden der Werkzeug-Bauteile 12, 14 angeordnet.

In zusammengebautem Zustand des Werkzeugs 10 sind die beiden Verbindungsschnittstellen 22, 26, wie in Fig. 1 und 5 gezeigt, derart miteinander verbunden, dass die Kühlmittelaustritte 20a, b und 24a, b jeweils übereinanderliegen bzw. miteinander fluchten. Die am ersten Werkzeug-Bauteil 12 angeordnete erste Verbindungsschnittstelle 22 weist eine in zwei Teil-Stirnflächen 28a, b aufgeteilte erste Stirnfläche 28 auf. Diese erste Stirnfläche 28 bzw. diese ersten Teil-Stirnflächen 28a, b dienen der Anbringung des Fügematerials an der ersten Verbindungsschnittstelle 22. Bei dem Fügematerial (nicht dargestellt) handelt es sich beispielsweise um Lot oder um ein Klebematerial. Zusätzlich weist die erste Verbindungsschnittstelle 22 eine von der ersten Stirnfläche 28 abstehende Erhöhung 30 auf, welche vorliegend in Form einer Passfeder 32 ausgebildet ist. Korrespondierend dazu weist die am zweiten Werkzeug-Bauteil 14 vorgesehene zweite Verbindungsschnittstelle 26 eine in zwei Teil-Stirnflächen 34a, b unterteilte zweite Stirnfläche 34 auf. Diese Teil-Stirnflächen 34a, b der zweiten Verbindungsschnittstelle 26 weisen vorzugsweise die gleiche Form und Größe wie die Teil-Stirnflächen 28a, b der ersten Verbindungsschnittstelle 22 auf. Entsprechend der an der ersten Verbindungsschnittstelle 22 angeordneten Erhöhung 30 weist die zweite Verbindungsschnittstelle 26 eine dazu korrespondierende Vertiefung 36 auf, welche in die zweite Stirnfläche 34 eingebracht ist. Diese Vertiefung 36 ist vorliegend als längliche Nut 38 ausgeführt.

Die am ersten Werkzeug-Bauteil 12 vorgesehene Passfeder 32 greift in zusammengebautem Zustand des Werkzeugs 10 vorzugsweise passgenau in die am zweiten Werkzeug-Bauteil 14 angeordnete Nut 38 ein. Die Querschnittsform und -größe der Passfeder 32 ist daher vorzugsweise exakt auf die Querschnittsform und -größe der Nut 38 angepasst. In der in den Fig. 1-5 gezeigten Ausführungsform haben die Passfeder 32 und die Nut 38 jeweils eine rechteckige Querschnittsform. Grundsätzlich sind jedoch verschiedenste Querschnitte (runde, dreieckige oder mehreckige Querschnitte) denkbar, solange die Querschnitte aufeinander angepasst sind.

Ein zentrales Merkmal der vorliegenden Erfindung besteht darin, dass die zweiten Kühlmittelaustritte 24a, b der im zweiten Werkzeug-Bauteil 14 verlaufenden zweiten Kühlmittelbohrungen 18a, b im Nutgrund 40 der Nut 38 angeordnet sind. Entsprechend dazu sind die Kühlmittelaustritte 20a, b der im ersten Werkzeug-Bauteil 12 verlaufenden ersten internen Kühlmittelbohrungen 16a, b an einer Oberseite 42 der Passfeder 32 angeordnet, welche in zusammengebautem Zustand des Werkzeugs 10 den Nutgrund 40 der Nut 38 kontaktiert. Das zur Verbindung der beiden Werkzeug-Bauteile 12, 14 verwendete Fügematerial (Lot oder Kleb) kann somit auf den Stirnflächen 28, 34 angebracht werden. Aufgrund der Passung zwischen der Passfeder 32 und der Nut 38 kann das Fügematerial jedoch nicht in den Nutgrund 40 der Nut 38 fließen und somit auch nicht die Kühlmittelaustritte 20a, b bzw. 24a, b verstopfen. Vorzugsweise wird das Fügematerial daher zunächst nur auf der ersten Stirnfläche 28 bzw. auf den ersten Teil-Stirnflächen 28a, b angebracht.

Weiterhin weist jede der beiden Verbindungsschnittstellen 22, 26 jeweils zumindest eine Ausrichtfläche 44a, b bzw. 46a, b auf, welche während der Fertigung des Werkzeugs 10 zur Ausrichtung der beiden Werkzeug-Bauteile 12, 14 relativ zueinander dienen. Wenngleich eine solche Ausrichtfläche 44a, b bzw. 46a, b pro Werkzeug-Bauteil 12, 14 grundsätzlich genügt, weist jedes der beiden Werkzeug-Bauteile 12, 14 gemäß der in Fig. 1-5 gezeigten Ausführungsform jeweils zwei Ausrichtflächen 44a, b bzw. 46a, b auf. Die am ersten Werkzeug-Bauteil 12 angeordneten Ausrichtflächen 44a, b werden vorliegend als erste Ausrichtfläche 44a und dritte Ausrichtfläche 44b bezeichnet. Dementsprechend werden die am zweiten Werkzeug-Bauteil angeordneten Ausrichtflächen 46a, b als zweite Ausrichtfläche 46a und vierte Ausrichtfläche 46b bezeichnet. Alle vier Ausrichtflächen 44a, b bzw. 46a, b sind vorzugsweise als planare Flächen ausgebildet, welche am Außenumfang 48 des ersten Werkzeug-Bauteils 12 bzw. am Außenumfang 50 des zweiten Werkzeug-Bauteils 14 angeordnet sind. Die erste und die dritte Ausrichtfläche sind auf gegenüberliegenden Stirnseiten der Passfeder 32 angeordnet. Sie verlaufen vorzugsweise parallel zueinander und orthogonal zu der Oberseite 42 der Passfeder 32. Die zweite und die vierte Stirnfläche 46a, b sind an gegenüberliegenden Stirnseiten der Nut 38 angeordnet. Diese verlaufen ebenfalls parallel zueinander und vorzugsweise orthogonal zum Nutgrund 40 der Nut 38.

Mittels der oben genannten Ausrichtflächen 44a, b bzw. 46a, b lassen sich die beiden Werkzeug-Bauteile 12, 14 relativ einfach während der Fertigung des Werkzeugs 10 relativ zueinander ausrichten, so dass die ersten Kühlmittelaustritte 20a, b mit den zweiten Kühlmittelaustritten 24a, b fluchten. Dies ist, beispielsweise mit Hilfe eines zangenähnlichen Werkzeugs, zu gewährleisten. Zur Ausrichtung der beiden Werkzeug-Bauteile 12, 14 muss lediglich die erste Ausrichtfläche 44a relativ zu der zweiten Ausrichtfläche 46a sowie die dritte Ausrichtfläche 44b relativ zu der vierten Ausrichtfläche 46b ausgerichtet werden. Hierunter wird verstanden, dass die erste Ausrichtfläche 44a komplanar zu der zweiten Ausrichtfläche 46a ausgerichtet wird, und dass die dritte Ausrichtfläche 44b komplanar zu der vierten Ausrichtfläche 46b ausgerichtet wird.

Um zu gewährleisten, dass die ersten Kühlmittelaustritte 20a, b mit den zweiten Kühlmittelaustritten 24a, b nach einer solchen Ausrichtung exakt fluchten, müssen lediglich die Abstände von den Ausrichtflächen 44a, b bzw. 46a, b zu den jeweiligen Kühlmittelaustritten 20a, b bzw. 24a, b entsprechend abgestimmt sein. Gemäß der vorliegenden Erfindung sind daher die Abstände von der ersten Ausrichtfläche 44a zu den jeweiligen ersten Kühlmittelaustritten 20a, b gleich groß wie die Abstände von der zweiten Ausrichtfläche 46a zu den jeweiligen zweiten Kühlmittelaustritten 24a, b. Genauso sind die Abstände von der dritten Ausrichtfläche 44b zu den jeweiligen ersten Kühlmittelaustritten 20a, b gleich groß wie die Abstände von der vierten Ausrichtfläche 46b zu den jeweiligen zweiten Kühlmittelaustritten 24a, b.

Die Nut-Feder-Verbindung 32, 38 zwischen den Werkzeug-Bauteilen 12, 14 verhindert also einerseits ein unerwünschtes Verstopfen der Kühlmittelaustritte 20a, b bzw. 24a, b und ermöglicht andererseits ein exaktes Ausrichten der beiden WerkzeugBauteile 12, 14 relativ zueinander, so dass die Kühlmittelaustritte 20a, b bzw. 24a, b miteinander fluchten bzw. deren Mittelpunkte exakt übereinanderliegen.

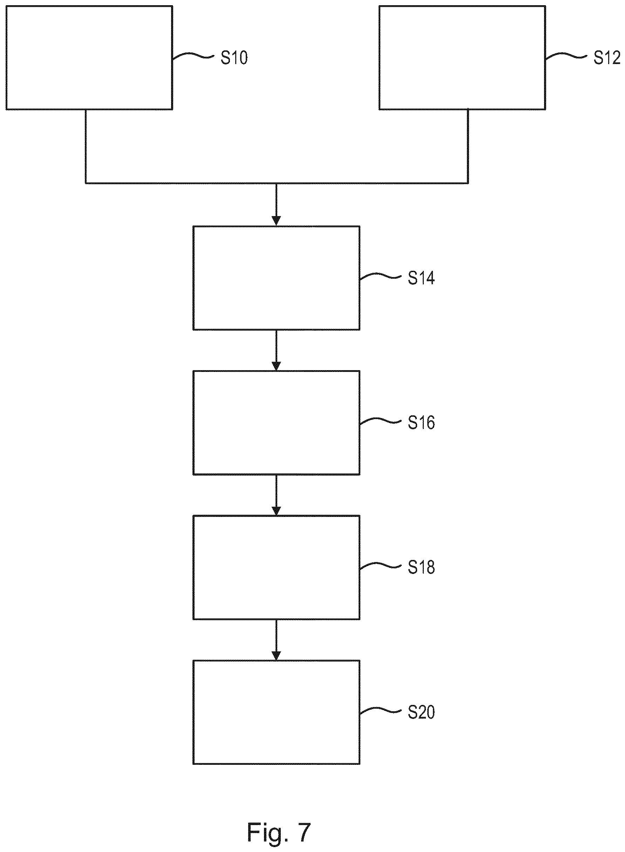

Die Herstellung des Werkzeugs 10 bzw. der Fügeprozess der beiden Werkzeug-Bauteile 12, 14 lässt sich also, wie folgt, anhand des in Fig. 7 schematisch gezeigten Verfahrensablaufs zusammenfassen:

In den ersten beiden Verfahrensschritten S10 und S12 werden die beiden Werkzeug-Bauteile 12, 14 mit oben genannten Merkmalen bereitgestellt.

Im Verfahrensschritt S14 wird dann das Fügematerial (Lot oder Klebematerial) an der ersten und/oder zweiten Stirnfläche 28, 34 angebracht. Vorzugsweise wird das Fügematerial lediglich an der ersten Stirnfläche 28 angebracht, da ein Anbringen des Fügematerials an der zweiten Stirnfläche 34 die Gefahr birgt, dass vor dem Fügen der beiden Werkzeug-Bauteile 12, 14 das Fügematerial in die Nut 38 hineinfließt.

Im nächsten Verfahrensschritt S16 werden die beiden Werkzeug-Bauteile 12, 14 zusammengeführt, so dass die am ersten Werkzeug-Bauteil 12 angeordnete Passfeder 32 in die am zweiten Werkzeug-Bauteil 14 angeordnete Nut 38 eingreift. Aufgrund dieser Nut-Passfeder-Verbindung kommt es zu keinerlei Kontakt des Fügematerials mit den Kühlmittelaustritten 20a, b bzw. 24a, b.

Im darauffolgenden Verfahrensschritt S18 werden die beiden Werkzeug-Bauteile 12, 14 vorzugsweise relativ zueinander entlang der Längsrichtung 52 der Passfeder 32 bzw. entlang der Längsrichtung 52' der Nut 38 bewegt. Die genannten Längsrichtungen 52, 52' der Passfeder 32 bzw. der Nut 38 verlaufen vorzugsweise orthogonal zu den Ausrichtflächen 44a, b bzw. 46a, b. Diese oszillierende Bewegung dient der Verteilung des Fügematerials auf den Stirnflächen 28, 34 bzw. den Teil-Stirnflächen 28a, b bzw. 34a, b.

Sobald das Fügematerial ausreichend gut verteilt ist, werden die beiden Werkzeug-Bauteile 12, 14 anhand der Ausrichtflächen 44a, b bzw. 46a, b in oben genannter Weise relativ zueinander ausgerichtet, so dass die Kühlmittelaustritte 20a, b des ersten Werkzeug-Bauteils 12 mit den Kühlmittelaustritten 24a, b des zweiten Werkzeug-Bauteils 14 fluchten. Dies kann entweder maschinell oder auch per Hand geschehen. Schlussendlich werden die beiden Verbindungsschnittstellen 22, 26 mit Hilfe des Fügematerials dauerhaft verbunden. Sofern es sich bei dem Fügematerial um Lot handelt, werden die beiden Werkzeug-Bauteile 12, 14 also im Verfahrensschritt S20 miteinander verlötet. Im Falle eines Klebematerials beinhaltet der Verfahrensschritt S20 das Aushärten des Klebematerials.

Es versteht sich, dass sich der oben genannte Verfahrensablauf lediglich auf das Verbinden der beiden Werkzeug-Bauteile 12, 14 bezieht. Weitere nachgelagerte Verfahrensschritte beinhalten üblicherweise die Endfertigung des Werkzeugs 10, wobei die Spanflächen bzw. Wirkkonturen des Werkzeugs in die Werkzeug-Bauteile 12, 14 eingebracht wird.

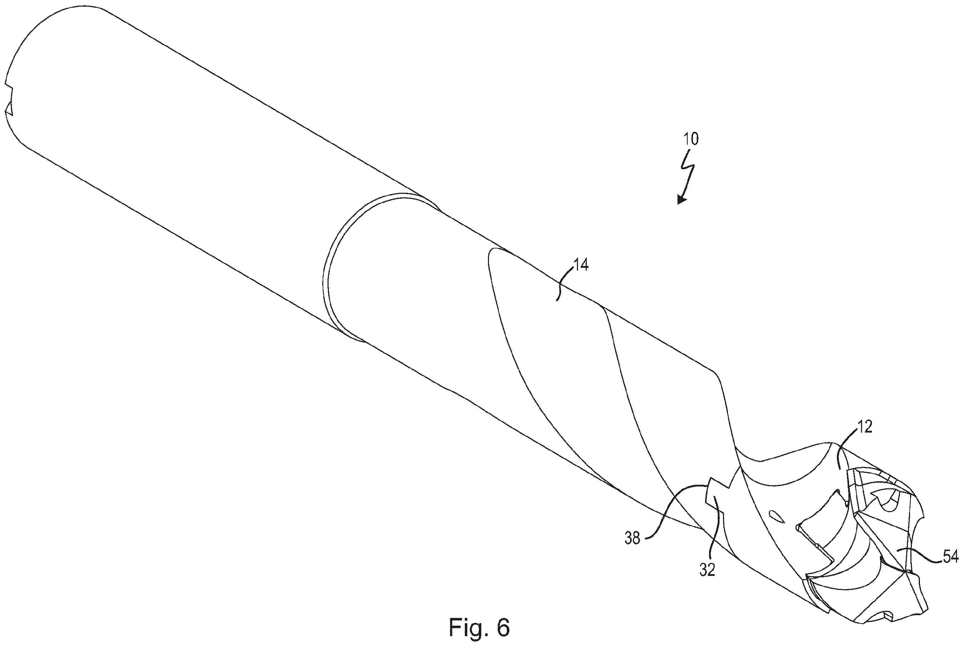

Fig. 6 zeigt ein Bohrwerkzeug als Beispiel für ein erfindungsgemäßen Werkzeug 10 zur spanabhebenden Bearbeitung eines Werkstücks, welches zwei in oben genannter Art miteinander verbundene Werkzeug-Bauteile 12, 14 aufweist. Das erste Werkzeug-Bauteil 12 ist dabei als Verbindungsstück ausgestaltet, welches eine Aufnahme aufweist, in welcher ein Schneideinsatz 54 auswechselbar aufgenommen werden kann. Bei dem zweiten Werkzeug-Bauteil 14 handelt es sich dagegen um den Schaft des Bohrwerkzeugs. Der Werkzeugschaft (zweites Werkzeug-Bauteil 14) und der Schneideinsatz 54 sind vorzugsweise aus Hartmetall gefertigt, wohingegen das Verbindungsstück (erste Werkzeugbauteil 12) vorzugsweise aus Stahl gefertigt ist. Die oben genannte Verbindungsart garantiert also bei diesem Bohrwerkzeug 10 das Fluchten der Kühlmittelaustritte der im Werkzeugschaft verlaufenden internen Kühlmittelbohrungen mit den Kühlmittelaustritten der im Verbindungsstück verlaufenden internen Kühlmittelbohrungen. Zu einem Verstopfen der Kühlmittelbohrungen während der Fertigung kann es aus oben genannten Gründen nicht kommen. Dies ist insbesondere deshalb von Vorteil, da es sich bei den Kühlmittelbohrungen 16a, b bzw. 18a, b der beiden Werkzeugbauteile 12, 14 des Bohrwerkzeugs 10 nicht um achsparallele Bohrung handelt. Wie in Fig. 5 gezeigt, sind die zweiten internen Kühlmittelbohrungen 18a, b als gewendelte Bohrungen ausgeführt, wohingegen die ersten internen Kühlmittelbohrungen 16a, b als geradlinige Bohrungen ausgeführt sind. Ohne das oben genannte Verfahren wäre eine Ausrichtung der beiden Werkzeug-Bauteile 12, 14 daher relativ schwierig zu gewährleisten. Zusätzlich zu den oben genannten Vorteilen garantiert die hier vorgestellte Nut-Feder-Verbindung zwischen den beiden Werkzeug-Bauteilen 12, 14 zudem eine Drehmomentmitnahme, wenngleich dies nicht der Hauptzweck der vorgestellten Lösung ist.

Abschließend sei erwähnt, dass sich die oben genannte Verbindungstechnik auch auf andere Werkzeuge zur spanenden Bearbeitung übertragen lassen. Das in Fig. 6 gezeigte Bohrwerkzeug soll daher nur als ein mögliches Beispiel angesehen werden. Zudem sei erwähnt, dass der Durchmesser der ersten Kühlmittelaustritte 20a, b nicht zwingend mit dem Durchmesser der zweiten Kühlmittelaustritte 24a, b übereinstimmen muss. In ausgerichtetem Zustand der beiden Werkzeug-Bauteile 12, 14 sollten lediglich die Mittelpunkte der ersten Kühlmittelaustritte 20a, b mit den Mittelpunkten der zweiten Kühlmittelaustritte 24a, b zusammenfallen. Ein Fluchten der Mittelachsen der ersten internen Kühlmittelbohrungen 16a, b mit den Mittelachsen der zweiten internen Kühlmittelbohrungen 18a, b ist ebenfalls nicht notwendig.

## Patentansprüche

1. Werkzeug zur spanenden Bearbeitung eines Werkstücks, mit:
- einem ersten Werkzeug-Bauteil (12), welches eine erste interne Kühlmittelbohrung (16a, 16b) und an einem ersten stirnseitigen Ende eine erste Verbindungsschnittstelle (22) aufweist, und
- einem zweiten Werkzeug-Bauteil (14), welches eine zweite interne Kühlmittelbohrung (18a, 18b) und an einem zweiten stirnseitigen Ende eine zweite Verbindungsschnittstelle (26) aufweist, wobei die erste interne Kühlmittelbohrung (16a, 16b) als gekrümmte, nicht geradlinige Bohrung, insbesondere als gewendelte Bohrung, ausgebildet ist, **dadurch gekennzeichnet, dass** die erste Verbindungsschnittstelle (22) eine erste Stirnfläche (28) zur Anbringung eines Fügematerials sowie eine von der ersten Stirnfläche (28) abstehende Erhöhung (30) aufweist, wobei die Erhöhung (30) als längliche, geradlinig verlaufende Passfeder (32) ausgebildet ist, welche sich in radialer Richtung zumindest über einen Großteil der Breite des ersten Werkzeug-Bauteils (12) erstreckt und die erste Stirnfläche (28) in zwei im Wesentlichen gleich große erste Teil-Stirnflächen (28a, 28b) unterteilt, wobei ein erster Kühlmittelaustritt (20a, 20b) der ersten internen Kühlmittelbohrung (16a, 16b) an der Erhöhung (30) angeordnet ist; und
- die zweite Verbindungsschnittstelle (26) eine zweite Stirnfläche (34) zur Anbringung des Fügematerials sowie eine in die zweite Stirnfläche (34) eingebrachte Vertiefung (36) aufweist, wobei die Vertiefung (36) als längliche, geradlinig verlaufende Nut (38) ausgebildet ist, welche sich in radialer Richtung zumindest über einen Großteil der Breite des zweiten Werkzeug-Bauteils (14) erstreckt und die zweite Stirnfläche (34) in zwei gleich große zweite Teil-Stirnflächen (34a, 34b) unterteilt, wobei ein zweiter Kühlmittelaustritt (24a, 24b) der zweiten internen Kühlmittelbohrung (18a, 18b) in der Vertiefung (36) angeordnet ist;
wobei das erste Werkzeug-Bauteil (12) und das zweite Werkzeug-Bauteil (14) mit Hilfe des an der ersten und zweiten Stirnfläche (28, 34) angebrachten Fügematerials derart miteinander verbunden sind, dass der erste Kühlmittelaustritt (20a, 20b) mit dem zweiten Kühlmittelaustritt (24a, 24b) fluchtet, und wobei die zweite interne Kühlmittelbohrung (18a, 18b) als gekrümmte, nicht geradlinige Bohrung, insbesondere als gewendelte Bohrung, ausgebildet ist.

2. Werkzeug nach Anspruch 1, wobei das erste Werkzeug-Bauteil (12) eine erste Ausrichtfläche (44a) und das zweite Werkzeug-Bauteil (14) eine zu der ersten Ausrichtfläche (44a) korrespondierende zweite Ausrichtfläche (46a) aufweist, wobei ein Abstand von der ersten Ausrichtfläche (44a) zu dem ersten Kühlmittelaustritt (20a, 20b) gleich groß ist wie ein zweiter Abstand von der zweiten Ausrichtfläche (46a) zu dem zweiten Kühlmittelaustritt (24a, 24b).

3. Werkzeug nach Anspruch 2, wobei das erste Werkzeug-Bauteil (12) weiterhin eine dritte Ausrichtfläche (44b) aufweist, wobei die erste und die dritte Ausrichtfläche (44a, 44b) auf gegenüberliegenden Seiten am Außenumfang (48) des erste Werkzeug-Bauteils (12) angeordnet sind und jeweils quer zu der ersten Stirnfläche (28) verlaufen, und wobei das zweite Werkzeug-Bauteil (14) weiterhin eine vierte Ausrichtfläche (46b) aufweist, wobei die zweite und die vierte Ausrichtfläche (46a, 46b) auf gegenüberliegenden Seiten am Außenumfang (50) des zweiten Werkzeug-Bauteils (14) angeordnet sind und quer zu der zweiten Stirnfläche (34) verlaufen.

4. Werkzeug nach Anspruch 3, wobei zumindest Teile der ersten und der dritten Ausrichtfläche (44a, 44b) an gegenüberliegenden Enden der Passfeder (32) angeordnet sind, und wobei zumindest Teile der zweiten und der vierten Ausrichtfläche (46a, 46b) an gegenüberliegenden Enden der Nut (38) angeordnet sind.

5. Werkzeug nach einem der Ansprüche 1 bis 4, wobei der zweite Kühlmittelaustritt (24a, 24b) im Nutgrund (40) der Nut (38) angeordnet ist, und wobei der erste Kühlmittelaustritt (20a, 20b) auf einer Oberseite (42) der Passfeder (32) angeordnet ist, welche in verbundenem Zustand der beiden Werkzeug-Bauteile (12, 14) den Nutgrund (40) kontaktiert.

6. Werkzeug nach einem der Ansprüche 1 bis 5, wobei mehrere erste interne Kühlmittelbohrungen (16a, 16b) im ersten Werkzeug-Bauteil (12) und mehrere zweite Kühlmittelbohrungen (18a, 18b) im zweiten Werkzeug-Bauteil (14) vorgesehen sind, wobei die ersten interne Kühlmittelbohrungen (16a, 16b) jeweils in einen ersten an der Erhöhung (30) angeordneten Kühlmittelaustritt (20a, 20b) münden und die zweiten interne Kühlmittelbohrungen (18a, 18b) jeweils in einen zweiten in der Vertiefung (36) angeordneten Kühlmittelaustritt (24a, 24b) münden, wobei sowohl die ersten Kühlmittelaustritte (20a, 20b) als auch die zweiten Kühlmittelaustritte (24a, 24b) dezentral, also nicht mittig am jeweiligen Werkzeug-Bauteil (12, 14) angeordnet sind, und wobei in verbundenem Zustand der beiden Werkzeug-Bauteile (12, 14) die ersten Kühlmittelaustritte (20a, 20b) mit den zweiten Kühlmittelaustritten (24a, 24b) paarweise fluchten.

7. Werkzeug nach einem der Ansprüche 1 bis 6, wobei das erste Werkzeug-Bauteil (12) und das zweite Werkzeug-Bauteil (14) an der ersten und der zweiten Verbindungsschnittstelle (22, 26) miteinander verlötet oder verklebt sind, und das Fügematerial entsprechend entweder ein Lot oder ein Klebematerial aufweist.

8. Werkzeug nach einem der Ansprüche 1 bis 7, wobei das Werkzeug (10) ein Bohr-, Dreh-, Fräs-, Nutstoß- oder Reibwerkzeug ist.

9. Werkzeug nach einem der Ansprüche 1 bis 8, wobei das erste oder das zweite Werkzeug-Bauteil (12, 14) aus Hartmetall ist, und das jeweils andere Werkzeug-Bauteil aus Stahl ist.

10. Werkzeug nach einem der Ansprüche 1 bis 9, wobei das erste oder das zweite Werkzeug-Bauteil (12, 14) als Werkzeugschaft ausgebildet ist, und das jeweils andere Werkzeug-Bauteil (12, 14) als Verbindungsstück ausgebildet ist, welches eine Aufnahme für einen Schneideinsatz (54) aufweist.

11. Verfahren zur Herstellung eines Werkzeugs (10) zur spanenden Bearbeitung eines Werkstücks, mit den Verfahrensschritten:
- Bereitstellen eines ersten Werkzeug-Bauteils (12), welches eine erste interne Kühlmittelbohrung (16a, 16b) und an einem ersten stirnseitigen Ende eine erste Verbindungsschnittstelle (22) aufweist, wobei die erste interne Kühlmittelbohrung (16a, 16b) als gekrümmte, nicht geradlinige Bohrung, insbesondere als gewendelte Bohrung, ausgebildet ist, und
Bereitstellen eines zweiten Werkzeug-Bauteils (14), welches eine zweite interne Kühlmittelbohrung (18a, 18b) und an einem zweiten stirnseitigen Ende eine zweite Verbindungsschnittstelle (26) aufweist,
**dadurch gekennzeichnet, dass** die erste Verbindungsschnittstelle (22) eine erste Stirnfläche (28) zur Anbringung eines Fügematerials sowie eine von der ersten Stirnfläche (28) abstehende Erhöhung (30) aufweist, wobei die Erhöhung (30) als längliche, geradlinig verlaufende Passfeder (32) ausgebildet ist, welche sich in radialer Richtung zumindest über einen Großteil der Breite des ersten Werkzeug-Bauteils (12) erstreckt und die erste Stirnfläche (28) in zwei im Wesentlichen gleich große erste Teil-Stirnflächen (28a, 28b) unterteilt, wobei ein erster Kühlmittelaustritt (20a, 20b) der ersten internen Kühlmittelbohrung (16a, 16b) an der Erhöhung (30) angeordnet ist;
- und die zweite interne Kühlmittelbohrung (18a, 18b) als gekrümmte, nicht geradlinige Bohrung, insbesondere als gewendelte Bohrung, ausgebildet ist, wobei die zweite Verbindungsschnittstelle (26) eine zweite Stirnfläche (34) zur Anbringung des Fügematerials sowie eine in die zweite Stirnfläche (34) eingebrachte Vertiefung (36) aufweist, wobei die Vertiefung (36) als längliche, geradlinig verlaufende Nut (38) ausgebildet ist, welche sich in radialer Richtung zumindest über einen Großteil der Breite des zweiten Werkzeug-Bauteils (14) erstreckt und die zweite Stirnfläche (34) in zwei gleich große zweite Teil-Stirnflächen (34a, 34b) unterteilt, wobei ein zweiter Kühlmittelaustritt (24a, 24b) der zweiten internen Kühlmittelbohrung (18a, 18b) in der Vertiefung (36) angeordnet ist;
wobei das Verfahren auch die Verfahrensschritte:
- Anbringen eines Fügematerials an der ersten und/oder zweiten Stirnfläche (28, 34);
- Ausrichten des ersten Werkzeug-Bauteils (12) relativ zu dem zweiten Werkzeug-Bauteil (14), und zwar derart, dass der erste Kühlmittelaustritt (20a, 20b) mit dem zweiten Kühlmittelaustritt (24a, 24b) fluchtet; und
- Verbinden der ersten Verbindungsschnittstelle (22) des ersten Werkzeug-Bauteils (12) mit der zweiten Verbindungsschnittstelle (26) des zweiten Werkzeug-Bauteils (14) mit Hilfe des Fügematerials,
aufweist.

## Claims

1. Tool for machining a workpiece, said tool comprising:
- a first tool component (12) which comprises a first internal coolant bore (16a, 16b) and, on a first face side end, a first connection interface (22), and
- a second tool component (14) which comprises a second internal coolant bore (18a, 18b) and, on a second face side end, a second connection interface (26),
wherein the first internal coolant bore (16a, 16b) is realized as a curved, non-linear bore, in particular as a spiral bore,
**characterized in that** the first connection interface (22) comprises a first end face (28) for attaching a joining material as well as an elevation (30) which protrudes from the first end face (28), wherein the elevation (30) is realized as an elongated feather key (32) which runs along a straight line, extends at least over a major part of the width of the first tool component (12) in the radial direction and divides the first end face (28) into two substantially equally-sized first part-end faces (28a, 28b), wherein a first coolant outlet (20a, 20b) of the first internal coolant bore (16a, 16b) is arranged on the elevation (30); and the second connection interface (26) comprises a second end face (34) for attaching the joining material as well as a recess (36) provided in the second end face (34), wherein the recess (36) is realized as elongated groove (38) which runs along a straight line, extends at least over a major part of the width of the second tool component (14) in the radial direction and divides the second end face (34) into two equally-sized second part-end faces (34a, 34b), wherein a second coolant outlet (24a, 24b) of the second internal coolant bore (18a, 18b) is arranged in the recess (36);
wherein the first tool component (12) and the second tool component (14) are joined together by means of the joining material attached to the first and second end faces (28, 34) in such a manner that the first coolant outlet (20a, 20b) is aligned with the second coolant outlet (24a, 24b), and wherein the second coolant bore (18a, 18b) is realized as a curved, non-linear bore, in particular as a spiral bore.

2. Tool according to claim 1, wherein the first tool component (12) comprises a first alignment face (44a) and the second tool component (14) comprises a second alignment face (46a) which corresponds with the first alignment face (44a), wherein a distance from the first alignment face (44a) to the first coolant outlet (20a, 20b) is as large as a second distance from the second alignment face (46a) to the second coolant outlet (24a, 24b).

3. Tool according to claim 2, wherein the first tool component (12) additionally comprises a third alignment face (44b), wherein the first and the third alignment faces (44a, 44b) are arranged on oppositely situated sides on an outer circumference (48) of the first tool component (12) and in each case run transversely with respect to the first end face (28), and wherein the second tool component (14) additionally comprises a fourth alignment face (46b), wherein the second and the fourth alignment faces (46a, 46b) are arranged on oppositely situated sides on an outer circumference (50) of the second tool component (14) and run transversely with respect to the second end face (34).

4. Tool according to claim 3, wherein at least parts of the first and of the third alignment faces (44a, 44b) are arranged on oppositely situated ends of the feather key (32), and wherein at least parts of the second and of the fourth alignment faces (46a, 46b) are arranged at oppositely situated ends of the groove (38).

5. Tool according to one of claims 1 to 4, wherein the second coolant outlet (24a, 24b) is arranged in a groove base (40) of the groove (38), and wherein the first coolant outlet (20a, 20b) is arranged on the top surface (42) of the feather key (32) which, in a connected state of the two tool components (12, 14), contacts the groove base (40).

6. Tool according to one of claims 1 to 5, wherein a plurality of first internal coolant bores (16a, 16b) are provided in the first tool component (12) and a plurality of second coolant bores (18a, 18b) are provided in the second tool component (14), wherein each of the first internal coolant bores (16a, 16b) opens out into a respective first coolant outlet (20a, 20b) which is arranged on the elevation (30), and each of the second internal coolant bores (18a, 18b) opens out into a respective second coolant outlet (24a, 24b) which is arranged in the recess (36), wherein both the first coolant outlets (20a, 20b) and the second coolant outlets (24a, 24b) are arranged in a decentral manner, that is not centrally on the respective tool component (12, 14), and wherein, in a connected state of the two tool components (12, 14), the first coolant outlets (20a, 20b) are aligned with the second coolant outlets (24a, 24b).

7. Tool according to one of claims 1 to 6, wherein the first tool component (12) and the second tool component (14) are soldered or bonded together at the first and the second connection interface (22, 26), and in a corresponding manner the joining material comprises either a soldering or a binding material.

8. Tool according to one of claims 1 to 7, wherein the tool (10) is a drilling, turning, milling, feather keyway broaching or reaming tool.

9. Tool according to one of claims 1 to 8, wherein the first or the second tool component (12, 14) is produced from carbide, and the respective other tool component is produced from steel.

10. Tool according to one of claims 1 to 9, wherein the first or the second tool component (12, 14) is realized as a tool shank, and the respective other tool component (12, 14) is realized as a connection piece which comprises a receiving means for a cutting insert (54).

11. Method for producing a tool (10) for machining a workpiece, said method having the method steps:
- providing a first tool component (12) which comprises a first internal coolant bore (16a, 16b) and, on a first face side end, a first connection interface (22), wherein the first internal coolant bore (16a, 16b) is realized as a curved, non-linear bore, in particular as a spiral bore, and
- providing a second tool component (14) which comprises a second internal coolant bore (18a, 18b) and, on a second face side end, a second connection interface (26),
**characterized in that** the first connection interface (22) comprises a first end face (28) for attaching a joining material as well as an elevation (30) which protrudes from the first end face (28), wherein the elevation (30) is realized as an elongated feather key (32) which runs along a straight line, extends at least over a major part of the width of the first tool component (12) in the radial direction and divides the first end face (28) into two substantially equally-sized first part-end faces (28a, 28b), wherein a first coolant outlet (20a, 20b) of the first internal coolant bore (16a, 16b) is arranged on the elevation (30); and the second coolant bore (18a, 18b) is realized as a curved, non-linear bore, in particular as a spiral bore, wherein the second connection interface (26) comprises a second end face (34) for attaching the joining material as well as a recess (36) provided in the second end face (34), wherein the recess (36) is realized as elongated groove (38) which runs along a straight line, extends at least over a major part of the width of the second tool component (14) in the radial direction and divides the second end face (34) into two equally-sized second part-end faces (34a, 34b), wherein a second coolant outlet (24a, 24b) of the second internal coolant bore (18a, 18b) is arranged in the recess;
wherein the method also comprises the method steps:
- providing a joining material to the first and/or second end face (28, 34);
- aligning the first tool component (12) relative to the second tool component (14), in such a manner that the first coolant outlet (20a, 20b) aligns with the second coolant outlet (24a, 24b); and
- connecting the first connection interface (22) of the first tool component (12) to the second connection interface (26) of the second tool component (14) by means of the joining material.

## Revendications

1. Outil pour l'usinage avec enlèvement de copeaux d'une pièce, comprenant :
- un premier élément structural d'outil (12) qui possède un premier trou à liquide de refroidissement interne (16a, 16b) et une première interface d'assemblage (22) au niveau d'une première extrémité frontale, et
- un deuxième élément structural d'outil (14) qui possède un deuxième trou à liquide de refroidissement interne (18a, 18b) et une deuxième interface d'assemblage (26) au niveau d'une première extrémité frontale,
le premier trou à liquide de refroidissement (16a, 16b) étant réalisé sous la forme d'un trou courbe non rectiligne, notamment sous la forme d'un trou en spirale,
**caractérisé en ce que** la première interface d'assemblage (22) possède une première face frontale (28) destinée à la mise en place d'un matériel de jointage ainsi qu'une élévation (30) qui dépasse de la première face frontale (28), l'élévation (30) étant réalisée sous la forme d'une clavette (32) allongée à projection rectiligne, laquelle s'étend dans la direction radiale au moins sur une grande partie de la largeur du premier élément structural d'outil (12) et divise la première face frontale (28) en deux faces frontales partielles (28a, 28b) sensiblement de la même taille, une première sortie de liquide de refroidissement (20a, 20b) du premier trou à liquide de refroidissement interne (16a, 16b) étant disposée au niveau de l'élévation (30), et la deuxième interface d'assemblage (26) possède une deuxième face frontale (34) destinée à la mise en place du matériel de jointage ainsi qu'une empreinte (36) pratiqué dans la deuxième face frontale (34), l'empreinte (36) étant réalisée sous la forme d'une rainure (38) allongée à projection rectiligne, laquelle s'étend dans la direction radiale au moins sur une grande partie de la largeur du deuxième élément structural d'outil (14) et divise la deuxième face frontale (34) en deux faces frontales partielles (34a, 34b) de la même taille, une deuxième sortie de liquide de refroidissement (24a, 24b) du deuxième trou à liquide de refroidissement interne (18a, 18b) étant disposée dans l'empreinte (36) ;
le premier élément structural d'outil (12) et le deuxième élément structural d'outil (14) étant assemblés l'un à l'autre à l'aide du matériel de jointage mis en place sur la première et la deuxième face frontale (28, 34) de telle sorte que la première sortie de liquide de refroidissement (20a, 20b) est alignée avec la deuxième sortie de liquide de refroidissement (24a, 24b) et le deuxième trou à liquide de refroidissement interne (18a, 18b) étant réalisé sous la forme d'un trou courbe non rectiligne, notamment sous la forme d'un trou en spirale.

2. Outil selon la revendication 1, le premier élément structural d'outil (12) possédant une première face d'orientation (44a) et le deuxième élément structural d'outil (14) une deuxième face d'orientation (46a) correspondant à la première face d'orientation (44a), un écart entre la première face d'orientation (44a) et la première sortie de liquide de refroidissement (20a, 20b) étant de même taille qu'un deuxième écart entre la deuxième face d'orientation (46a) et la deuxième sortie de liquide de refroidissement (24a, 24b).

3. Outil selon la revendication 2, le premier élément structural d'outil (12) possédant en outre une troisième face d'orientation (44b), la première et la troisième face d'orientation (44a, 44b) étant disposées sur des côtés opposés sur le pourtour extérieur (48) du premier élément structural d'outil (12) et s'étendant respectivement transversalement par rapport à la première face frontale (28), et le deuxième élément structural d'outil (14) possédant en outre une quatrième face d'orientation (46b), la deuxième et la quatrième face d'orientation (46a, 46b) étant disposées sur des côtés opposés sur le pourtour extérieur (50) du deuxième élément structural d'outil (14) et s'étendant transversalement par rapport à la deuxième face frontale (34).

4. Outil selon la revendication 3, au moins des parties de la première et la troisième face d'orientation (44a, 44b) étant disposées à des extrémités opposées de la clavette (32), et au moins des parties de la deuxième et de la quatrième face d'orientation (46a, 46b) étant disposées à des extrémités opposées de la rainure (38).

5. Outil selon l'une des revendications 1 à 4, la deuxième sortie de liquide de refroidissement (24a, 24b) étant disposée dans le fond de rainure (40) de la rainure (38), et la première sortie de liquide de refroidissement (20a, 20b) étant disposée sur un côté supérieur (42) de la clavette (32) qui, à l'état assemblé des deux éléments structuraux d'outil (12, 14), entre en contact avec le fond de rainure (40).

6. Outil selon l'une des revendications 1 à 5, plusieurs premiers trous à liquide de refroidissement internes (16a, 16b) se trouvant dans le premier élément structural d'outil (12) et plusieurs deuxièmes trous à liquide de refroidissement internes (18a, 18b) se trouvant dans le deuxième élément structural d'outil (14), les premiers trous à liquide de refroidissement internes (16a, 16b) débouchant respectivement dans une première sortie de liquide de refroidissement (20a, 20b) disposée au niveau de l'élévation (30) et les deuxièmes trous à liquide de refroidissement internes (18a, 18b) débouchant respectivement dans une deuxième sortie de liquide de refroidissement (24a, 24b) disposée dans l'empreinte (36), les premières sorties de liquide de refroidissement (20a, 20b) ainsi que les deuxièmes sorties de liquide de refroidissement (24a, 24b) étant disposées de manière décentralisée, c'est-à-dire pas au centre sur l'élément structural d'outil (12, 14) respectif, et à l'état assemblé des deux éléments structuraux d'outil (12, 14) les premières sorties de liquide de refroidissement (20a, 20b) sont alignées par paires avec les deuxièmes sorties de liquide de refroidissement (24a, 24b).

7. Outil selon l'une des revendications 1 à 6, le premier élément structural d'outil (12) et le deuxième élément structural d'outil (14) étant brasés ou collés ensemble au niveau de la première et de la deuxième interface d'assemblage (22, 26), et le matériel de jointage possédant en conséquence soit une brasure, soit un matériel adhésif.

8. Outil selon l'une des revendications 1 à 7, l'outil (10) étant un outil de trou, de tournage, de fraisage, à mortaiser les rainures ou d'alésage.

9. Outil selon l'une des revendications 1 à 8, le premier ou le deuxième élément structural d'outil (12, 14) étant en carbure et l'autre élément structural d'outil respectif étant en acier.

10. Outil selon l'une des revendications 1 à 9, le premier ou le deuxième élément structural d'outil (12, 14) étant réalisé sous la forme d'une queue d'outil et l'autre élément structural d'outil (12, 14) respectif étant réalise sous la forme d'une pièce d'assemblage qui possède un attachement pour un insert de coupe (54).

11. Procédé de fabrication d'un outil (10) pour l'usinage avec enlèvement de copeaux d'une pièce, comprenant les étapes suivantes :
- fourniture d'un premier élément structural d'outil (12) qui possède un premier trou à liquide de refroidissement interne (16a, 16b) et une première interface d'assemblage (22) au niveau d'une première extrémité frontale, le premier trou à liquide de refroidissement (16a, 16b) étant réalisé sous la forme d'un trou courbe non rectiligne, notamment sous la forme d'un trou en spirale, et
- fourniture d'un deuxième élément structural d'outil (14) qui possède un deuxième trou à liquide de refroidissement interne (18a, 18b) et une deuxième interface d'assemblage (26) au niveau d'une première extrémité frontale,
**caractérisé en ce que** la première interface d'assemblage (22) possède une première face frontale (28) destinée à la mise en place d'un matériel de jointage ainsi qu'une élévation (30) qui dépasse de la première face frontale (28), l'élévation (30) étant réalisée sous la forme d'une clavette (32) allongée à projection rectiligne, laquelle s'étend dans la direction radiale au moins sur une grande partie de la largeur du premier élément structural d'outil (12) et divise la première face frontale (28) en deux faces frontales partielles (28a, 28b) sensiblement de la même taille, une première sortie de liquide de refroidissement (20a, 20b) du premier trou à liquide de refroidissement interne (16a, 16b) étant disposée au niveau de l'élévation (30), et le deuxième trou à liquide de refroidissement interne (18a, 18b) est réalisé sous la forme d'un trou courbe non rectiligne, notamment sous la forme d'un trou en spirale, la deuxième interface d'assemblage (26) possédant une deuxième face frontale (34) destinée à la mise en place du matériel de jointage ainsi qu'une empreinte (36) pratiquée dans la deuxième face frontale (34), l'empreinte (36) étant réalisée sous la forme d'une rainure (38) allongée à projection rectiligne, laquelle s'étend dans la direction radiale au moins sur une grande partie de la largeur du deuxième élément structural d'outil (14) et divise la deuxième face frontale (34) en deux faces frontales partielles (34a, 34b) de même taille, une deuxième sortie de liquide de refroidissement (24a, 24b) du deuxième trou à liquide de refroidissement interne (18a, 18b) étant disposée dans l'empreinte (36) ;
le procédé comprenant également les étapes suivantes :
- mise en place du matériel de jointage sur la première et la deuxième face frontale (28, 34) ;
- orientation du premier élément structural d'outil (12) par rapport au deuxième élément structural d'outil (14), et ce de telle sorte que la première sortie de liquide de refroidissement (20a, 20b) est alignée avec la deuxième sortie de liquide de refroidissement (24a, 24b) ; et
- assemblage de la première interface d'assemblage (22) du premier élément structural d'outil (12) avec la deuxième interface d'assemblage (26) du deuxième élément structural d'outil (14) à l'aide du matériel de jointage.
